# EUROPÄISCHE PATENTSCHRIFT

(11) **EP 3 643 565 B1**
(45) Veröffentlichungstag und Bekanntmachung des Hinweises auf die Patenterteilung: **30.06.2021**
(21) Anmeldenummer: 19193517.0
(22) Anmeldetag: 26.08.2019
(51) Int. Cl.: B60P 7/08

(54) **VORRICHTUNG, SYSTEM UND VERFAHREN ZUM SICHERN EINER LAST IN EINEM FAHRZEUG**
DEVICE, SYSTEM AND METHOD FOR SECURING A LOAD IN A VEHICLE
DISPOSITIF, SYSTÈME ET PROCÉDÉ DE FIXATION D'UNE CHARGE DANS UN VÉHICULE

(30) Priorität: 26.09.2018 DE 102018123734
(43) Veröffentlichungstag der Anmeldung: 29.04.2020
(73) Patentinhaber: allsafe GmbH & Co. KG, 78234 Engen (DE)
(72) Erfinder: PIETREK, Daniel, 78234 Engen (DE)
(74) Vertreter: Patentanwälte und Rechtsanwalt Weiß, Arat & Partner mbB

(56) Entgegenhaltungen:
- DE-A1-102007 018 254
- DE-A1-102012 221 386

## Beschreibung

### Technisches Gebiet

Die Erfindung betrifft eine Vorrichtung, ein System und ein Verfahren nach den unabhängigen Ansprüchen.

### Stand der Technik

Derartige Vorrichtungen, System und Verfahren sind bereits in vielfältiger Form und Ausgestaltung bekannt und gebräuchlich.

Die DE 10 2014 109 311 A1 offenbart beispielsweise eine Verzurröse, welche verschiebbar und arretierbar in einer Laderaumschiene eines Kraftfahrzeugs angeordnet werden kann. Die Verzurröse umfasst ein Rastierungselement, welches über einen Betätigungsknopf freigegeben werden kann.

Ferner ist aus der DE 10 2005 061 493 A1 eine Gepäckhalteeinrichtung bekannt, die in einer Schiene festgelegt werden kann. Über einen als Wippe ausgelegten Betätigungsknopf kann die Gepäckhalteeinrichtung freigegeben werden.

Ferner ist aus der DE 10 2012 221386 A1 eine Vorrichtung zum Sichern einer Last in einem Fahrzeug bekannt, umfassend einen Grundkörper,ein Last-Anbindungselement, zumindest zwei Rastelemente sowie einen Betätigungsabschnitt, wobei die Rastelemente jeweils zumindest einen konvexen Abschnitt umfassen, wobei die Rastelemente so angeordnet sind, dass sie sich relativ zum Grundkörper horizontal und reversibel zwischen einer eingefahrenen und einer ausgefahrenen Position bewegen können,wobei die Vorrichtung ferner ein Gegenlager umfasst, welches so angeordnet ist, dass es sich relativ zum Grundkörper vertikal und reversibel zwischen einer abgesenkten und einer angehobenen Position bewegen kann,wobei das Gegenlager ferner eingerichtet ist, um mit den konvexen Abschnitten in Kontakt zu treten,wobei die Vorrichtung eingerichtet ist, so dass ein Betätigen des Betätigungsabschnitts das Gegenlager in die abgesenkte Position bewegt, wobei das Gegenlager während einer Abwärtsbewegung derart mit den konvexen Abschnitten der Rastelemente zusammenwirkt, dass die Rastelemente in die eingefahrene Position bewegt werden, und wobei die Rastelemente ferner in Richtung auf die ausgefahrene Position vorgespannt sind, so dass die konvexen Abschnitte der Rastelemente bei Ausbleiben einer Betätigung das Gegenlager in die angehobene Position bewegen.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den Unteransprüchen beschrieben.

Eine **Vorrichtung** zum Sichern einer Last in einem Fahrzeug gemäss der vorliegenden Erfindung umfasst einen Grundkörper, ein Last-Anbindungselement sowie zumindest zwei Rastelemente und einen Betätigungsabschnitt.

Die Rastelemente umfassen jeweils zumindest einen konvexen Abschnitt. Die Rastelemente sind so angeordnet, dass sie sich relativ zum Grundkörper horizontal und reversibel zwischen einer eingefahrenen und einer ausgefahrenen Position bewegen können.

Die Vorrichtung umfasst ferner ein Gegenlager, welches so angeordnet ist, dass es sich relativ zum Grundkörper vertikal und reversibel zwischen einer abgesenkten und einer angehobenen Position bewegen kann.

Das Gegenlager ist ferner eingerichtet, um mit den konvexen Abschnitten in Kontakt zu treten.

Die Vorrichtung ist eingerichtet, so dass ein Betätigen des Betätigungsabschnitts das Gegenlager in die abgesenkte Position bewegt, wobei das Gegenlager während einer Abwärtsbewegung derart mit den konvexen Abschnitten der Rastelemente zusammenwirkt, dass die Rastelemente in die eingefahrene Position bewegt werden.

Die Rastelemente sind ferner in Richtung auf die ausgefahrene Position vorgespannt, so dass die konvexen Abschnitte der Rastelemente bei Ausbleiben einer Betätigung das Gegenlager in die angehobene Position bewegen.

Das Anbindungselement kann beispielsweise eine Öse sein.

Ein Betätigen des Betätigungsabschnitts erfolgt vorzugsweise durch Herunterdrücken.

Die Rastelemente können jeweils zumindest eine Rastnase umfassen. Die Rastelemente können auch jeweils zwei, drei oder mehr Rastnasen umfassen. Die Rastnasen sind vorzugsweise so ausgebildet, dass sie in Rastausnehmungen einer die Vorrichtung aufnehmenden Schiene einfahren können.

Das Gegenlager und der Betätigungsabschnitt können einstückig ausgebildet sein. Einstückig meint hierbei, dass das Gegenlager und der Betätigungsabschnitt Bestandteile eines einzigen Bauteils sind, welches sowohl die Funktion des Betätigungsabschnitts als auch die Funktion des Gegenlagers übernimmt.

Der Grundkörper kann eine zentrale Ausnehmung umfassen, in welcher in Betriebslage das Gegenlager, der Betätigungsabschnitt, und die Rastelemente angeordnet sind, wobei das Gegenlager und der Betätigungsabschnitt separat oder gemeinsam mittels zumindest einer Führungseinrichtung in einer komplementären Führung festgelegt sein können.

Vorzugsweise handelt es sich bei dem Gegenlager um ein winkelförmiges Gegenlager.

Bei der Führungseinrichtung kann es sich beispielsweise um einen Zapfen oder dergleichen handeln. Bei der komplementären Führung kann es sich beispielsweise um eine Nut handeln, in welcher der Zapfen beweglich geführt ist.

Die vorliegende Erfindung umfasst ferner ein **System** zum Sichern einer Last in einem Fahrzeug umfassend eine Vorrichtung wie vorstehend beschrieben sowie eine Schiene, wobei die Schiene Rastausnehmungen umfasst, welche komplementär zu den Rastelementen ausgebildet sind. Sind Rastnasen an den Rastelementen vorhanden, so sind die Rastausnehmungen vorzugsweise komplementär zu den Rastnasen ausgebildet.

Die Schiene weist vorzugsweise Abkragungen bzw. Hinterschneidungen auf. In der ausgefahrenen Position können die Rastelemente derart unter diese Abkragungen bzw. Hinterschneidungen fahren, dass ein entstehender Formschluss ein Herausnehmen der Vorrichtung aus der Schiene verhindert. Ein Entlanggleiten längs der Schiene wird durch die in die Rastausnehmungen eingefahrenen Rastelemente bzw. Rastnasen verhindert.

Ein in die Schiene absenkbarer Abschnitt der Vorrichtung kann eine Achsensymmetrie aufweisen. Zumindest der in die Schiene absenkbare Teil der Vorrichtung ist daher vorzugsweise achsensymmetrisch.

Es ist denkbar, dass die Schiene nur auf einer Seite Rastausnehmungen aufweist und auf der gegenüberliegenden Seite als Widerlager ohne Rastausnehmungen ausgebildet ist. In der ausgefahrenen Position fährt vorzugsweise eines der Rastelemente (bzw. eine oder mehrere Rastnasen) in die Rastausnehmungen ein und das gegenüberliegende Rastelement (bzw. die gegenüberliegenden Rastnasen) stützt bzw. stützen sich am Widerlager ab. Durch diese Abstützung ergibt sich ein vorteilhafter Klapperschutz, weil die Vorrichtung einerseits gegen Verschieben entlang der Schiene und gegen ein Herausnehmen aus der Schiene gesichert ist und andererseits ein Spiel der Vorrichtung innerhalb der Schiene stark eingeschränkt oder sogar komplett beseitigt ist. Vorteilhafterweise können einander zugewandte Abschnitte der Rastelemente bzw. Rastnasen und des Widerlagers komplementär zueinander ausgebildet sein. Einem konkaven Teilabschnitt einer Rastnase kann beispielsweise ein komplementär konvex ausgebildetes Widerlager gegenüberstehen.

Vorzugsweise umfasst die Schiene Abkragungen, welche ein Inneres der Schiene vorzugsweise teilweise übergreifen. Vorzugsweise stellen diese Abkragungen zugleich Auflage-Flächen bereit, auf welchen Auflage-Abschnitte der Vorrichtung aufgelegt werden können.

Diese Abkragungen sind zugleich Hinterschneidungen in Bezug auf den Innenraum der Schiene. Vorzugsweise können die Rastelemente bzw. Rastnasen nicht nur in die korrespondierenden Rastausnehmungen im Inneren der Schiene einfahren, um die Vorrichtung innerhalb der Schiene gegenüber einem Verschieben entlang der Schiene festzulegen. Vielmehr fahren die Rastelemente vorzugsweise derart aus dem Grundkörper heraus und in einen Raum unterhalb der Abkragungen der Schiene ein, dass die Vorrichtung auch gegen ein Herausnehmen aus der Schiene nach oben gesichert ist.

Die vorbeschriebene Vorrichtung und das vorbeschriebene System sind in vielerlei Hinsicht sehr vorteilhaft.

Die Vorrichtung kann mit nur einer Hand bedient werden, da sowohl das Einsetzen der Vorrichtung in die Schiene also auch das Betätigen, insbesondere Herunterdrücken, des Betätigungselements mit nur einer Hand erfolgen kann.

Die Vorrichtung ist einfach gebaut. Beispielsweise kann die Vorspannung auf die ausgefahrene Position mit Hilfe von einer, vorzugsweise zwei oder mehr Federn erfolgen, welche über die Wirkverbindung der konvexen Abschnitte mit dem Gegenlager sowohl eine Vorspannung der Rastelemente in die ausgefahrene Position als auch eine Vorspannung des Betätigungsabschnitts und des Gegenlagers in die angehobene Position bewirken.

Die Achsensymmetrie gewährleistet, dass eine Drehung um 180° das Einbringen in die Schiene sowie die Funktion des Systems nicht beeinträchtigt. Dadurch werden Fehler beim Festlegen der Vorrichtung in der Schiene vermieden.

Ferner ist die Vorrichtung so eingerichtete, dass sie nur in die Schiene eingebracht und dort gegebenenfalls ein Stück weit entlang der Schiene bewegt werden muss, um einzurasten. Dies ermöglicht eine sehr sichere Festlegung der Vorrichtung innerhalb der Schiene.

Die vorliegende Erfindung umfasst darüber hinaus ein **Verfahren** zum Sichern einer Last in einem Fahrzeug mit Hilfe eines Systems wie vorstehend beschrieben. Das Verfahren umfasst die folgenden Schritte:
- direktes oder indirektes Verbinden der Last mit dem Last-Anbindungselement
- Einbringen der Vorrichtung in die Schiene
- Verschieben der Vorrichtung entlang der Schiene bis eines der Rastelemente (oder zumindest eine Rastnase) in die korrespondierenden Rastausnehmungen der Schiene einfährt

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figuren 1 bis 4 ein System gemäss der vorliegenden Erfindung in verschiedenen Anordnungen,
Figur 5 eine Seiten-Ansicht nach Figur 2,
Figur 6 eine perspektivische Ansicht der im Inneren eines Grundkörpers 2 befindlichen Elementen nach Figur 5,
Figur 7 eine Seiten-Ansicht nach Figur 4,
Figur 8 eine perspektivische Ansicht der im Inneren des Grundkörpers 2 befindlichen Elementen nach Figur 7 sowie in
Figur 9 eine Explosionszeichnung der Vorrichtung 1.

Der besseren Übersicht halber sind nicht in allen Figuren sämtliche Merkmale mit Bezugsziffern versehen.

### Ausführungsbeispiel

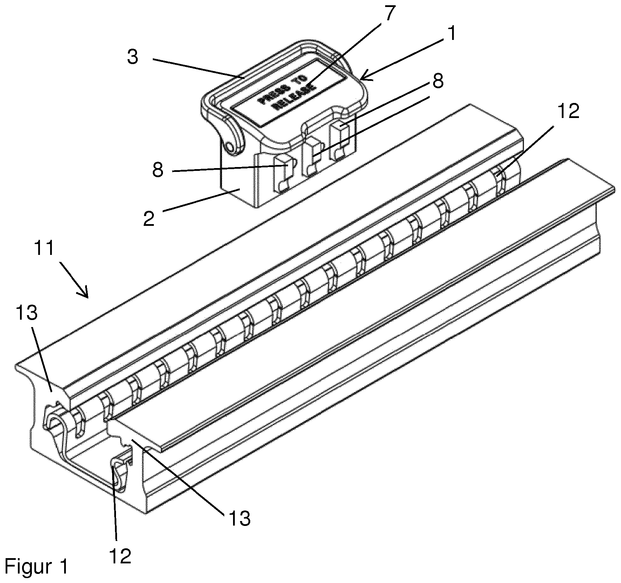

In Figur 1 ist ein System umfassend eine Vorrichtung 1 und eine Schiene 11 dargestellt, wobei die Vorrichtung 1 nicht in die Schiene 11 eingesetzt ist. Ein Grundkörper 2, Rastnasen 8 sowie ein Betätigungsabschnitt 7 und ein Last-Anbindungselement 3 in Form einer Öse sind als Bestandteile der Vorrichtung 1 erkennbar. Die Schiene 11 weist Abkragungen 13 sowie in ihrem Inneren auf einer Seite Rastausnehmungen 12 und gegenüberliegend ein Widerlager 22 ohne Rastausnehmungen auf.

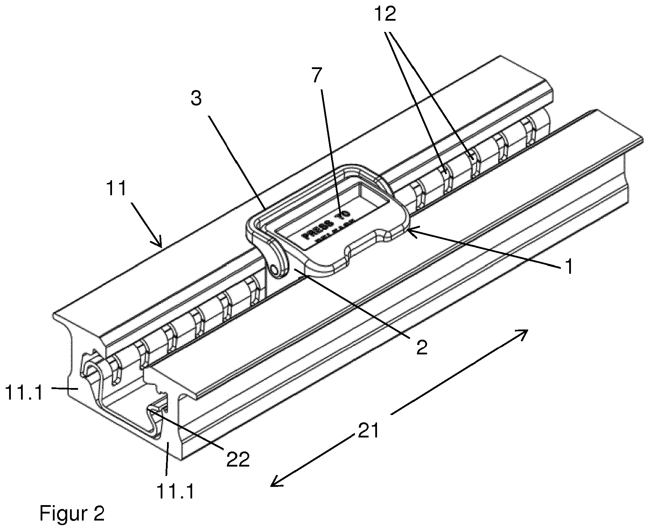

Figur 2 zeigt das System nach Figur 1, wobei die Vorrichtung 1 in die Schiene 11 eingesetzt ist und wobei der Betätigungsabschnitt 7 sich in einer abgesenkten Position befindet.

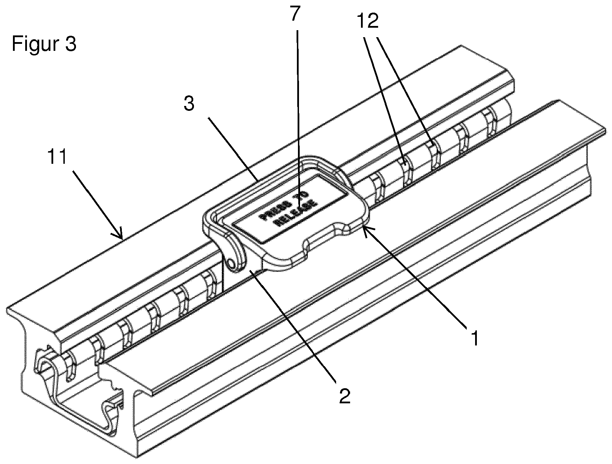

Figur 3 zeigt das System nach Figur 2, wobei der Betätigungsabschnitt 7 sich in einer angehobenen Position befindet.

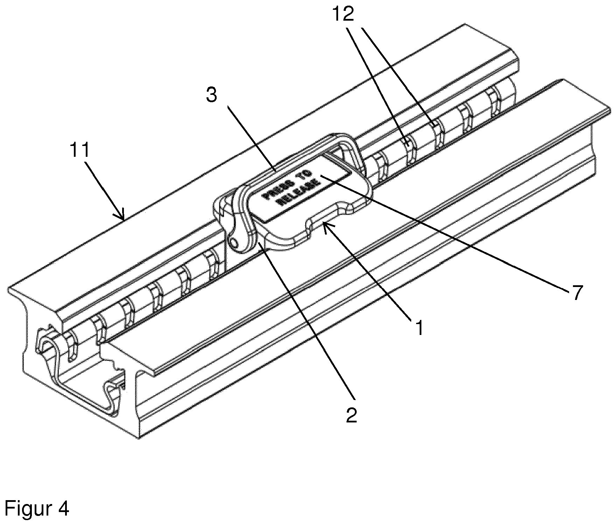

Figur 4 zeigt das System nach Figur 3, wobei das Last-Anbindungselement 3 sich in einer aufgeklappten Position befindet.

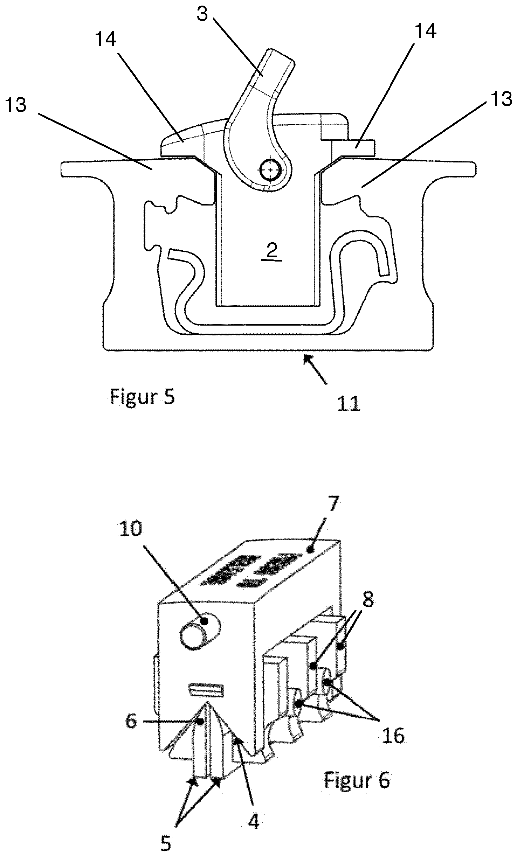

Figur 5 zeigt ein System gemäss der vorliegenden Erfindung mit eingefahrenen Rastelementen 5. Die Abkragungen 13 der Schiene 11 sowie Auflage-Abschnitte 14 der Vorrichtung 1 sind deutlich erkennbar.

Figur 6 zeigt eine perspektivische Ansicht der im Inneren des Grundkörpers 2 befindlichen Elemente nach Figur 5. Hierbei ist das winkelförmige Gegenlager 4 zu erkennen, welches einstückig mit dem Betätigungsabschnitt 7 gefertigt ist. Ferner sind konvexe Abschnitte 6 und Rastnasen 8 der Rastelemente 5 erkennbar. Weiterhin sind eine Führungseinrichtung 10 und zwei Führungsbolzen 16 erkennbar.

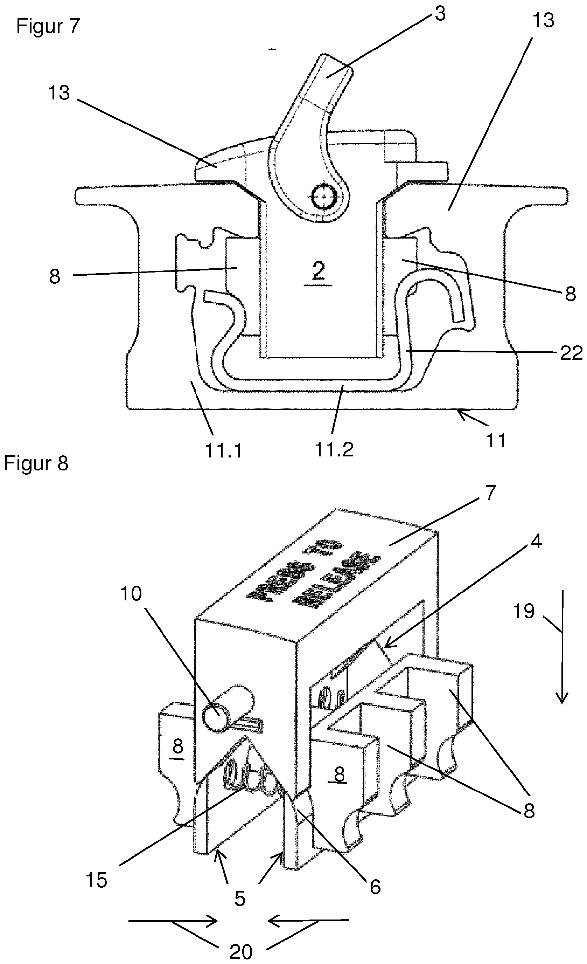

Figur 7 zeigt ein System gemäss der vorliegenden Erfindung mit ausgefahrenen Rastelementen 5.

Figur 8 zeigt eine perspektivische Ansicht der im Inneren des Grundkörpers 2 befindlichen Elemente nach Figur 7. Ferner ist eine Feder 15 erkennbar, welche in Figur 6 zwischen den Rastelementen 5 nicht sichtbar ist.

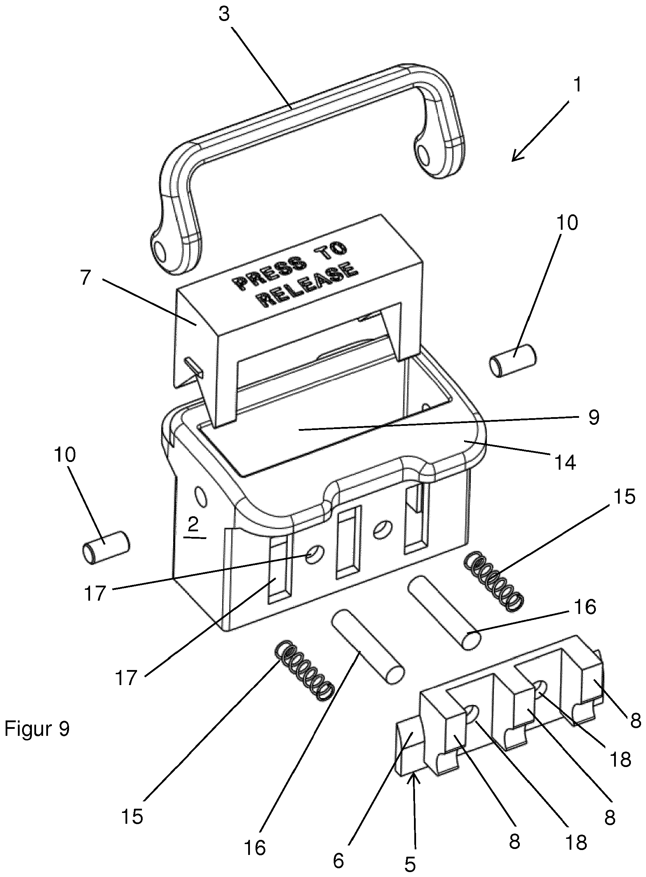

Figur 9 zeigt eine Explosionszeichnung der Vorrichtung 1. Hierbei sind eine zentrale Ausnehmung 9 im Inneren des Grundkörpers 2 erkennbar sowie zwei Führungseinrichtungen 10 in Form von Bolzen. Weiterhin sind die Rastnasen 8 und die konvexen Abschnitte 6 des Rastelements 5 erkennbar. Weiterhin sind zwei Federn 15 und zwei Führungsbolzen 16 erkennbar. Ausserdem sind Durchtrittsöffnungen 17 im Grundkörper 2 erkennbar.

Bezugnehmend auf die Figuren 1 bis 9 erklärt sich die **Funktionsweise** der erfindungsgemässen Vorrichtung folgendermassen:

Die in den Figuren 6 und 8 dargestellten Elemente befinden sich in Betriebslage, welche beispielsweise in Figur 3 dargestellt ist, im Inneren des Grundkörpers 2. Hierbei ist der Betätigungsabschnitt 7, welcher einstückig mit dem winkelförmigen Gegenlager 4 ausgebildet ist, über die Führungseinrichtungen 10 in Form zweier Bolzen in einer (nicht dargestellten) Nut oder dergleichen geführt, welche senkrecht in der zentralen Ausnehmung 9 des Grundkörpers 2 verläuft. Das winkelförmige Gegenlager 4 und der Betätigungsabschnitt 7 können sich daher innerhalb des Grundkörpers 2 reversibel zwischen einer angehobenen und einer abgesenkten Position bewegen, was aus einem Vergleich der Figuren 1 und 2 sowie der Figuren 2 und 3 hervorgeht. Ferner entspricht die in Figur 6 gezeigte Anordnung der abgesenkten Position, während die Anordnung nach Figur 8 der angehobenen Position entspricht.

Die Rastelemente 5 befinden sich in Betriebslage innerhalb des Grundkörpers 2, wobei die drei Rastnasen 8 durch die Durchtrittsöffnungen 17 nach aussen ragen können, was in den Figuren 1 und 7 erkennbar ist. Figur 5 zeigt eine entsprechende Anordnung mit eingefahrenen Rastelementen 5 und Rastnasen 8. Die Rastelemente 5 können sich hierbei also horizontal aufeinander zu und voneinander weg bewegen. Die Rastnasen 8 können entsprechend in den Grundkörper 2 einfahren oder aus den Durchtrittsöffnungen 17 nach aussen fahren.

Die horizontale Bewegung der Rastelemente 5 wird hierbei durch ihre Anordnung innerhalb des Grundkörpers 2 eingeschränkt. Die Rastelemente 5 umfassen zwei Gleit-Ausnehmungen 18, welche in Betriebslage auf zwei Führungsbolzen 16 aufgesteckt sind. Die Führungsbolzen 16 sind innerhalb des Grundkörpers 2 in entsprechenden Durchtrittsöffnungen 17 festgelegt. Die Rastelemente 5 können sich daher innerhalb des Grundkörpers 2 horizontal entlang der Führungsbolzen 16 bewegen, welche die Gleit-Ausnehmungen 18 in Betriebslage durchgreifen. Aus einem Vergleich der Figuren 6 und 8 geht hervor, dass die Federn 15 (in Figur 8 ist perspektiv-bedingt nur eine dieser Federn 15 erkennbar) dafür sorgen, dass die Rastelemente 5 in Richtung der ausgefahrenen Position (gezeigt in den Figuren 7 und 8) vorgespannt sind. Die Federn 15 sorgen also für eine Vorspannung, welche für ein Auseinandergleiten der Rastelemente 5 sorgt.

Wie ebenfalls einem Vergleich der Figuren 6 und 8 zu entnehmen ist, werden die Rastelemente 5 dann entgegen einer Vorspannkraft der Federn 15 aufeinander zu bewegt, wenn das winkelförmige Gegenlager 4 in eine abgesenkte Position bewegt wird. Drückt ein Benutzer ausgehend von der in den Figuren 7 und 8 dargestellten Anordnung auf den Betätigungsabschnitt 7, so sorgt die Abwärtsbewegung des winkelförmigen Gegenlagers 4 dafür, dass sich die Rastelemente 5 in die Position bewegen, welche in den Figuren 5 und 6 dargestellt ist. Hierbei drücken Abschnitte der winkelförmigen Gegenlager 4 auf die konvexen Abschnitte 6, so dass sich vorzugsweise eine tangentiale Berührungslinie zwischen den sich berührenden Abschnitten des winkelförmigen Gegenlagers 4 und den konvexen Abschnitten 6 ergibt.

Die Ausbildung einer tangentialen Berührungslinie anstatt beispielsweise einer Berührungsfläche, welche sich bei zwei einander gegenüberliegenden flächenförmigen Abschnitte ergeben würde, wird durch das Zusammenspiel des konvexem Abschnitts 6 mit dem plan bzw. eben ausgestalteten Abschnitt des Gegenlagers 4 bereitgestellt. Eine konvexe Fläche und eine plane Fläche können im Allgemeinen keine sich berührenden Flächenabschnitt ausbilden, es entsteht nur eine Berührungslinie in Form einer Tangente des konvexen Abschnitts 6 am Abschnitt des Gegenlagers 4. Dadurch wird ein Verhaken von Gegenlager 4 und konvexem Abschnitt 6 effektiv verhindert, weil im Falle einer Berührungslinie deutlich weniger Reibung auftritt als im Falle sich berührender Flächen(abschnitte).

Eine Abwärtsbewegung des Betätigungsabschnittes 7 und des winkelförmigen Gegenlagers 4 in Richtung eines Pfeils 19 führt also zu einer Bewegung der Rastelemente aufeinander zu entlang der Richtungen der Pfeile 20.

Der Benutzer kann hierbei mit einem oder mehreren Fingern auf den Betätigungsabschnitt 7 drücken, um diesen in die abgesenkte Position zu bewegen.

Bleibt ein solcher Druck aus, beispielsweise, weil der Benutzer seine Finger vom Betätigungsabschnitt 7 entfernt, so bewegen sich die Rastelemente 5, angetrieben durch die Kraft der Federn 15, entgegen einer Richtung der Pfeile 20 voneinander weg. Diese Bewegung wird über die konvexen Abschnitte 6 auf das winkelförmige Gegenlager 4 übertragen, welches sich entsprechend in die angehobene Position bewegt. Die Federn 15 bewirken also Bewegungen entgegen der in Figur 8 dargestellten Pfeile 19, 20.

Das Last-Anbindungselement 3 dient der Anbindung einer beliebigen Last und deren Festlegung beispielsweise am Boden eines Fahrzeugs, in welchen die Schiene 11 eingelassen sein kann.

Ein Festlegen der Vorrichtung 1 erfolgt auf die Weise, welche in den Figuren 1 bis 4 dargestellt ist. Hierbei kann das Last-Anbindungselement 3 auch bereits mit einer Last verbunden sein. In den Figuren 1 bis 4 ist eine solche Last jedoch der Übersicht halber nicht dargestellt.

Die Vorrichtung 1 wird zunächst in die Schiene 11 eingesetzt, was den Figuren 1 und 2 zu entnehmen ist. Je nach Auslegung der Feder 15 bzw. je nach Auswahl der Federkraft und abhängig von der räumlichen Ausgestaltung der Rastnasen 8 muss das Betätigungselement 7 zum Einsetzen abgesenkt werden, um die Rastnasen 8 vor dem Einsetzen in die eingefahrene Position zu bewegen. Vorzugsweise ist das System jedoch so ausgelegt, dass die Rastnasen 8 beim Einbringen der Vorrichtung 1 in das Innere der Schiene 11 beim Passieren der Abkragungen 13 von diesen ein Stück weit nach innen gedrückt werden, ohne dass der Benutzer den Betätigungsabschnitt 7 nach unten drücken muss. Somit ist ein einfaches einhändiges Einsetzen möglich, indem die Vorrichtung 1 schlicht unter leichtem Druck in die Schiene 11 gepresst wird.

Je nachdem, wie die Rastnasen 8 relativ zu den Rastausnehmungen 12 unmittelbar nach dem Einsetzen der Vorrichtung 1 zum Liegen kommen, fahren erstere sofort in letztere ein. Ist dies nicht der Fall, so kann die Vorrichtung 1 ein kleines Stück weit entlang der Schiene 11 bewegt werden, d.h. in einer der Richtungen, welche durch einen Pfeil 21 angedeutet sind. Sobald Rastnasen 8 und Rastausnehmungen 12 sich entsprechend gegenüberliegen und kein Druck auf das Betätigungselement 7 ausgeübt wird, fahren die Rastnasen 8 auf Grund der Federkraft der Federn 15 in die Rastausnehmungen 12 ein.

Um die Vorrichtung 1 entlang der Schiene, d.h. in Richtung des Pfeils 21, zu bewegen, muss nur der Betätigungsabschnitt 7 nach unten gedrückt werden, damit die Rastelemente 5 sich einander annähern und somit die Rastnasen 8 in den Grundkörper 2 einfahren. In Figur 2 ist der Betätigungsabschnitt 7 in dieser abgesenkten Position dargestellt, welche ein Verschieben der Vorrichtung 1 entlang der Schiene 11 erlaubt. Figur 3 zeigt die entsprechende Anordnung mit angehobenem Betätigungsabschnitt 7, welche ein Verschieben in Richtung eines Pfeils 21 nicht erlaubt.

Aus einem Vergleich der Figuren 5 und 7 geht ferner hervor, dass die Rastnasen 8 die Vorrichtung 1 zweifach festlegen. Erstens fahren die rechts in Figur 7 gezeigten Rastnasen 8 in die dort befindlichen Rastausnehmungen (nicht erkennbar) der Schiene ein und verhindern somit ein Verschieben der Vorrichtung 1 entlang der Schiene 11. Zweitens fahren die Rastnasen 8 auch soweit unter die Abkragungen 13, dass ein Herausnehmen der Vorrichtung 1 aus der Schiene 11 nach oben verhindert wird.

In Figur 4 ist das Last-Anbindungselement 3 nach oben geklappt und bereit zum Anbinden der Last.

Insbesondere den Figuren 5 und 7 ist entnehmbar, dass die Schiene 11 aus zwei Teilschienen 11.1, 11.2 besteht. Hierbei liegt die innere Teilschiene 11.2 innerhalb der äusseren Teilschiene 11.1. Die innere Teilschiene 11.2 kann mit der äusseren Teilschiene 11.1 beispielsweise verschraubt sein. Die innere Teilschiene 11.2 stellt das Widerlager 22 sowie die Rastausnehmungen 12 bereit. Die Rastausnehmungen befinden sich auf der dem Widerlager 22 gegenüberliegenden Seite der Teilschiene 11.2 und sind in Figur 7 nicht erkennbar. Beide Teilschienen 11.1, 11.2 können auf einfache Weise beispielsweise als Strangpressprofile hergestellt und anschliessend miteinander verbunden werden.

Ferner ist aus den Figuren 5 bis 8 ersichtlich, dass der in die Schiene 11 absenkbare Teil der Vorrichtung 1 achsensymmetrisch ist. Eine Drehung um 180° würde die Funktionsweise der Vorrichtung 1 nicht beeinträchtigen, da die Rastnasen 8 auf beiden Seiten der Vorrichtung 1 nach aussen treten können.

Obwohl nur einige bevorzugte Ausführungsbeispiele der Erfindung beschrieben und dargestellt wurde/n, ist es offensichtlich, dass der Fachmann zahlreiche **Modifikationen** hinzufügen kann, ohne Wesen und Umfang der Erfindung zu verlassen.

Beispielsweise kann es in sämtlichen Ausführungsbeispielen ausreichen, nur eine Gleitausnehmung 18 vorzusehen.

Ferner kann es in sämtlichen Ausführungsbeispielen ausreichen, nur eine Feder 15 vorzusehen. Die Feder 15 kann auch durch ein anderes Kraftspeicherelement ersetzt werden.

Anstelle der zwei Teilschienen 11.1, 11.2 kann auch daran gedacht sein, nur eine Schiene 11 einzusetzen, welche sämtliche Funktionen der Teilschienen 11.1, 11.2 übernimmt.

### Bezugszeichenliste

| | | | | | |
|---|---|---|---|---|---|
| 1 | Vorrichtung | 34 | | | |
| 2 | Grundkörper | 35 | | | |
| 3 | Last-Anbindungselement | 36 | | | |
| 4 | Gegenlager | 37 | | | |
| 5 | Rastelement | 38 | | | |
| 6 | Konvexer Abschnitt | 39 | | | |
| 7 | Betätigungsabschnitt | 40 | | | |
| 8 | Rastnase | 41 | | | |
| 9 | Zentrale Ausnehmung | 42 | | | |
| 10 | Führungseinrichtung | 43 | | | |
| 11 | Schiene | 44 | | | |
| 12 | Rastausnehmung | 45 | | | |
| 13 | Abkragung / Hinterschneidung | 46 | | | |
| 14 | Auflage-Abschnitt | 47 | | | |
| 15 | Feder | 48 | | | |
| 16 | Führungsbolzen | 49 | | | |
| 17 | Durchtrittsöffnungen | 50 | | | |
| 18 | Gleit-Ausnehmung | 51 | | | |
| 19 | Pfeil | 52 | | | |
| 20 | Pfeil | 53 | | | |
| 21 | Pfeil | 54 | | | |
| 22 | Widerlager | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung (1) zum Sichern einer Last in einem Fahrzeug umfassend einen Grundkörper (2),
ein Last-Anbindungselement (3),
zumindest zwei Rastelemente (5) sowie
einen Betätigungsabschnitt (7),
**dadurch gekennzeichnet, dass**
die Rastelemente (5) jeweils zumindest einen konvexen Abschnitt (6) umfassen,
wobei die Rastelemente (5) so angeordnet sind, dass sie sich relativ zum Grundkörper (2) horizontal und reversibel zwischen einer eingefahrenen und einer ausgefahrenen Position bewegen können,
wobei die Vorrichtung (1) ferner ein Gegenlager (4) umfasst, welches so angeordnet ist, dass es sich relativ zum Grundkörper (1) vertikal und reversibel zwischen einer abgesenkten und einer angehobenen Position bewegen kann,
wobei das Gegenlager (4) ferner eingerichtet ist, um mit den konvexen Abschnitten (6) in Kontakt zu treten,
wobei die Vorrichtung (1) eingerichtet ist, so dass ein Betätigen des Betätigungsabschnitts (7) das Gegenlager (4) in die abgesenkte Position bewegt, wobei das Gegenlager (4) während einer Abwärtsbewegung derart mit den konvexen Abschnitten (6) der Rastelemente (5) zusammenwirkt, dass die Rastelemente (5) in die eingefahrene Position bewegt werden,
und wobei die Rastelemente (5) ferner in Richtung auf die ausgefahrene Position vorgespannt sind, so dass die konvexen Abschnitte (6) der Rastelemente (5) bei Ausbleiben einer Betätigung das Gegenlager (4) in die angehobene Position bewegen.

2. Vorrichtung nach Anspruch 1, **dadurch gekennzeichnet, dass** die Rastelemente (5) jeweils zumindest eine Rastnase (8) umfassen.

3. Vorrichtung nach einem der Ansprüche 1 oder 2, **dadurch gekennzeichnet, dass** das Gegenlager (4) und der Betätigungsabschnitt (7) einstückig ausgebildet sind.

4. Vorrichtung nach zumindest einem der vorhergehenden Ansprüche, **dadurch gekennzeichnet, dass** der Grundkörper (1) eine zentrale Ausnehmung (9) umfasst, in welcher in Betriebslage das Gegenlager (4), der Betätigungsabschnitt (7), und die Rastelemente (5) angeordnet sind, wobei das Gegenlager (4) und der Betätigungsabschnitt separat oder gemeinsam mittels einer Führungseinrichtung (10, Zapfen etc.) in einer komplementären Führung festgelegt sind.

5. Vorrichtung nach zumindest einem der vorhergehenden Ansprüche, **dadurch gekennzeichnet, dass** das Gegenlager (4) ein winkelförmiges Gegenlager (4) ist.

6. System zum Sichern einer Last in einem Fahrzeug umfassend eine Vorrichtung nach zumindest einem der Ansprüche 1 bis 5 sowie eine Schiene (11), wobei die Schiene Rastausnehmungen (12) umfasst, welche komplementär zu den Rastelementen (5) ausgebildet sind.

7. System nach Anspruch 6, **dadurch gekennzeichnet, dass** ein in die Schiene (11) absenkbarer Abschnitt der Vorrichtung (1) eine Achsensymmetrie aufweist.

8. System nach einem der Ansprüche 6 oder 7, **dadurch gekennzeichnet, dass** die Schiene (11) nur auf einer Seite Rastausnehmungen (12) aufweist und auf der gegenüberliegenden Seite als Widerlager (22) ausgebildet ist, wobei in der ausgefahrenen Position eines der Rastelemente (5) in die Rastausnehmungen (12) einfährt und das gegenüberliegende Rastelement (5) sich am Widerlager abstützt.

9. Verfahren zum Sichern einer Last in einem Fahrzeug mit Hilfe eines Systems gemäss zumindest einem der Ansprüche 6 bis 8, das Verfahren umfassend die folgenden Schritte:
- direktes oder indirektes Verbinden der Last mit dem Last-Anbindungselement (3)
- Einbringen der Vorrichtung (1) in die Schiene (11)
- Verschieben der Vorrichtung (1) entlang der Schiene (11) bis eines der Rastelemente (5) oder zumindest eine der Rastnasen (8) in die korrespondierenden Rastausnehmungen (12) der Schiene (11) einfährt

## Claims

1. Device (1) for securing a load in a vehicle comprising
a base body (2)
a load fastening element (3),
at least two latching elements (5) and
an operating section (7),
**characterized in that**
the latching elements (5) each comprise at least one convex portion (6),
wherein the latching elements (5) are arranged to move horizontally and reversibly between a retracted and an extended position relative to the base body (2),
wherein the device (1) further comprises an counter bearing (4) which is arranged to move vertically and reversibly relative to the base body (1) between a lowered position and a raised position,
wherein the counter bearing (4) is further adapted to contact the convex portions (6), wherein the device (1) is arranged so that an actuation of the operating section (7) moves the counter bearing (4) into the lowered position,
wherein the counter bearing (4) cooperates with the convex portions (6) of the latching elements (5) during a downward movement in such a way that the latching elements (5) are moved into the retracted position,
and wherein the latching elements (5) are further pre-stressed toward the extended position so that the convex portions (6) of the latching elements (5) move the counter bearing (4) to the raised position in the absence of actuation.

2. Device according to claim 1, **characterized in that** the latching elements (5) each comprise at least one latching lug (8).

3. Device according to one of claims 1 or 2, **characterized in that** the counter bearing (4) and the operating section (7) are formed in one piece.

4. Device according to at least one of the previous claims, **characterized in that** the base body (2) comprises a central recess (9) in which in the operating position the counter bearing (4), the operating section (7) and the latching elements (5) are arranged, wherein the counter bearing (4) and the operating section are fixed separately or together by means of a guiding device (10, pin, etc.) in a complementary guide.

5. Device according to at least one of the previous claims, **characterized in that** the counter bearing (4) is an angular counter bearing (4).

6. System for securing a load in a vehicle comprising a device according to at least one of claims 1 to 5 and a rail (11), wherein the rail comprises latching recesses (12) which are complementary to the latching elements (5).

7. System according to claim 6, **characterized in that** a section of the device (1) which can be lowered into the rail (11) has a symmetry of axes.

8. System according to one of claims 6 or 7, **characterized in that** the rail (11) has latching recesses (12) on one side only and is designed as a thrust bearing (22) on the opposite side, wherein in the extended position one of the latching elements (5) moves into the latching recesses (12) and the opposite latching element (5) is supported on the thrust bearing.

9. Method for securing a load in a vehicle by means of a system according to at least one of claims 6 to 8, the method comprising the following steps:
- directly or indirectly connecting the load to the load fastening element (3)
- inserting the device (1) into the rail (11)
- displacing the device (1) along the rail (11) until one of the latching elements (5) or at least one of the latching lugs (8) enters the corresponding latching recesses (12) of the rail (11)

## Revendications

1. Dispositif (1) de fixation d'une charge dans un véhicule, comprenant un corps de base (2),
un élément de fixation de charge (3),
au moins deux éléments d'encliquetage (5), ainsi que un segment d'actionnement (7),
**caractérisé par le fait que**
les éléments d'encliquetage (5) comportent, chacun, au moins un segment convexe (6),
dans lequel les éléments d'encliquetage (5) sont disposés de manière à pouvoir se déplacer par rapport au corps de base (2) de manière horizontale et réversible entre une position rétractée et une position avancée,
dans lequel le dispositif (1) comporte par ailleurs un contre-appui (4) qui est disposé de sorte qu'il puisse se déplacer par rapport au corps de base (1) de manière verticale et réversible entre une position abaissée et une position relevée,
dans lequel le contre-appui (4) est par ailleurs configuré pour entrer en contact avec les segments convexes (6),
dans lequel le dispositif (1) est configuré de sorte qu'un actionnement du segment d'actionnement (7) déplace le contre-appui (4) dans la position abaissée, dans lequel le contre-appui (4) coopère, pendant un mouvement vers le bas, avec les segments convexes (6) des éléments d'encliquetage (5) de sorte que les éléments d'encliquetage (5) soient déplacés en position rétractée,
et dans lequel les éléments d'encliquetage (5) sont par ailleurs prétendus en direction de la position avancée, de sorte que les segments convexes (6) des éléments d'encliquetage (5) déplacent, en l'absence d'un actionnement, le contre-appui (4) dans la position relevée.

2. Dispositif selon la revendication 1, **caractérisé par le fait que** les éléments d'encliquetage (5) comportent, chacun, au moins une patte d'encliquetage (8).

3. Dispositif selon l'une des revendications 1 ou 2, **caractérisé par le fait que** le contre-appui (4) et le segment d'actionnement (7) sont formés d'une seule pièce.

4. Dispositif selon au moins l'une des revendications précédentes, **caractérisé par le fait que** le corps de base (1) comporte un évidement central (9) dans lequel sont disposés, en position de fonctionnement, le contre-appui (4), le segment d'actionnement (7) et les éléments d'encliquetage (5), dans lequel le contre-appui (4) et le segment d'actionnement sont fixés séparément ou conjointement au moyen d'un moyen de guidage (10, tourillon, etc.) dans un guide complémentaire.

5. Dispositif selon au moins l'une des revendications précédentes, **caractérisé par le fait que** le contre-appui (4) est un contre-appui angulaire (4).

6. Système de fixation d'une charge dans un véhicule, comportant un dispositif selon au moins l'une des revendications 1 à 5 ainsi qu'un rail (11), dans lequel le rail comporte des évidements d'encliquetage (12) qui sont réalisés de manière complémentaire des éléments d'encliquetage (5).

7. Système selon la revendication 6, **caractérisé par le fait qu'**un segment du dispositif (1) pouvant être abaissé dans le rail (11) présente une symétrie axiale.

8. Système selon l'une des revendications 6 ou 7, **caractérisé par le fait que** le rail (11) ne présente des évidements d'encliquetage (12) que d'un seul côté et est, du côté opposé, conçu comme une butée (22), dans lequel, en position avancée (5), un des éléments d'encliquetage pénètre dans les évidements d'encliquetage (12) et l'élément d'encliquetage opposé (5) s'appuie sur la butée.

9. Procédé de fixation d'une charge dans un véhicule à l'aide d'un système selon au moins l'une des revendications 6 à 8, le procédé comportant les étapes suivantes consistant à:
- connecter la charge directement ou indirectement à l'élément de fixation de charge (3),
- introduire le dispositif (1) dans le rail (11),
- déplacer le dispositif (1) le long du rail (11) jusqu'à ce que l'un des éléments d'encliquetage (5) ou au moins l'une des pattes d'encliquetage (8) pénètre dans les évidements d'encliquetage correspondants (12) du rail (11).
